# EUROPEAN PATENT SPECIFICATION

(11) **EP 2 718 377 B1**
(45) Date of publication and mention of the grant of the patent: **14.08.2019**
(21) Application number: 12730677.7
(22) Date of filing: 07.06.2012
(51) Int. Cl.: C08L 95/00, C08K 5/00, C08K 5/103, C08K 5/101

(54) **BITUMINOUS BINDER COMPOSITION**
BITUMEN-BINDEZUSAMMENSETZUNG
COMPOSITION DE LIANT BITUMINEUX

(30) Priority: 07.06.2011 EP 11168956
(43) Date of publication of application: 16.04.2014
(73) Proprietor: Latexfalt B.V., 2396 AP Koudekerk a/d Rijn (NL)
(72) Inventor: LOMMERTS, Bert Jan, NL-1703 RB Heerhugowaard (NL); COTIUGA, Irina Manuela, NL-3521 GZ Utrecht (NL); STRUIK, Jan Willem, NL-1768 AN Barsingerhorn (NL)
(74) Representative: Nederlandsch Octrooibureau
(86) International application number: PCT/NL2012/050399
(87) International publication number: WO 2012/169891

(56) References cited:
- EP-A1- 1 482 012
- WO-A1-03/062315
- WO-A1-2005/087869
- EUGENE GOOCH E: "Determination of the Iodine Value of Selected Oils: An Experiment Combining FTIR Spectroscopy with Iodometric Titrations", THE CHEMICAL EDUCATOR, SPRINGER-VERLAG, NE, vol. 6, no. 1, 1 February 2001 (2001-02-01), pages 7-9, XP019367439, ISSN: 1430-4171

## Description

### Summary of the invention

The present invention relates to a bituminous binder composition and to its application in repairing the surface of an asphalt road construction, in particular of a very open asphalt road construction.

### Background of the invention

In the past, asphalt mixes were dense and usually had a continuous grading of aggregate to reduce the voids volume. Since several decades, however, very open asphalt (or very porous asphalt) is frequently used in the construction of motorways. Very open asphalt has a void volume of about 20% and comprises rather course aggregate material (usually aggregate grade 6/16 mm, but also grades 4/8 mm and 0/16 are used). Also known is double layer very open asphalt, wherein the lower layer comprises course aggregate material (e.g. grade 11/16 mm) and the upper layer fine aggregate material (e.g. grade 4/8 mm). The grade of aggregate materials is determined according to NEN-EN 13043 and is expressed in d/D mm.

Very open asphalt has several advantages over conventional asphalt. For example, water is more easily drained, thereby reducing the runoff from a site and surrounding areas and also reducing splash and spray from passing cars. Moreover, traffic on road constructions having a very open asphalt top-layer produce less noise. However, with their more open structure, roads having a very open asphalt top-layer have a greater tendency to wear by e.g. raveling (loss of aggregate material due to disruption of the bonds between the aggregates) and by enhanced oxidation of the bitumen. As a consequence, very open asphalt top-layers must be replaced about every ten years whereas conventional asphalt top-layers need replacement only after about fifteen years. However, it would be advantageous if the very open asphalt top-layer could be repaired which requires less effort and is more economical than replacement of the complete layer.

Quite often, only the bituminous binder from the 1 - 2 cm top layer of the asphalt construction undergoes embrittlement (loss of ductility) due to oxidative processes and should be replenished. And so, the newly added bitumen should preferably penetrate about 0.5 - 2 aggregate size deep; a convenient way to do that is to spray a bituminous binder composition comprising a rejuvenating agent. The rejuvenating agent has a healing effect on the micro-cracks formed during ageing of the old/existing bituminous binder. The viscosity of the new bituminous binder composition should be low enough to ensure the penetration depth of about 0.5 - 2 aggregate size, but in the same time it should be high enough to create new bonds between the aggregates and to avoid complete dripping in the sub-base layer.

Common bituminous binder compositions usually comprise bitumen, a polymer (frequently an elastomer) and optionally other components like cross-linking agents, fluxing oils, rejuvenating agents (frequently solvents), drying agents (curing agents or siccatives) and the like.

Diluents, e.g. solvents, are added with the purpose of lowering the viscosity of the bituminous binder compositions so that the healing effects are accelerated. While such solvents could be added to the bituminous binder composition, this is undesired because they are environmentally unfriendly and can create a hazardous working environment when the processing temperature is above the flash point of the solvent.

The present invention therefore provide a bituminous binder composition having a viscosity range that makes this composition very suitable for repair operations of asphalt top-layers, in particular very open asphalt top-layers: it rejuvenates the aged bitumen (preventing oxidation) as well as creates new bituminous bonds between aggregates (preventing raveling).

Compositions based on bitumen and linseed oil or varnished linseed oil are known in the art. JP 01-121367 A, incorporated by reference, discloses a bituminous emulsion comprising (a1) bitumen and 1 - 20 wt.% linseed oil, and (a2) 10 - 40 wt.%, based on (a1), of a solvent mixture consisting of 85 - 97 wt.% of a crude oil based solvent (e.g. kerosene) and 3 - 15 wt.% of a vegetable oil (e.g. turpentine oil), and (b) an aqueous portion comprising 0.1 - 3 wt.% of a cationic emulsifier. The bituminous emulsion is used for paving.

GB 2.045.260 A, incorporated by reference, discloses a bituminous composition comprising bitumen, linseed oil varnish (or boiled linseed oil) in an amount such that the original viscosity of the bitumen measured by a tar-viscometer at 110°C is reduced to at least 1/5^{th} of its value, stearin and paraffin. The bitumen has preferably a penetration of 71 - 100 10⁻¹ mm. According to a preferred embodiment, the bituminous composition comprises 70 - 90 wt.% bitumen, 1 - 3 wt.% linseed oil varnish. 2 - 10 wt.% paraffin, 3 - 20 wt.% stearin and 0.05 - 0.5 wt.% of β-naphtol. The bituminous composition is used for coating polyurethane substrates having open pores.

HU 57247 A2, incorporated by reference, discloses a bituminous composition comprising 15 - 35 parts by weight of a bitumen having a softening point of 80° - 100°C, 3 - 8 parts by weight of a bitumen having a softening point of more than 100°C, 0.1 - 15 parts by weight of a styrene-butadiene-styrene copolymer, 1.8 - 4.8 parts by weight of varnished linseed oil, 1.2 - 3.2 parts by weight of modified resin, 20 - 60 parts by weight of an apolar hydrocarbon solvent, 6 - 26 parts by weight of chalk, 1 - 3 parts by weight of silica gel or zeolite, 6 - 12 parts by weight of asbestos or polypropylene fiber, 15 - 27 parts by weight of aluminum paste and 0.1 - 1.5 parts by weight of cobalt or copper naphthenate. The bituminous composition is used for insulating and ant-corrosion purposes.

WO 2005/087869, incorporated by reference, discloses a bituminous binder composition comprising bitumen, an elastomer, a mono-alkylester of a vegetable oil or an animal oil, and an amide additive. This bituminous binder composition may be used for emulsion applications.

EP 1.482.012 A1, incorporated by reference, discloses a bituminous binder composition comprising bitumen, an elastomer, an ester diluents and a curing agent, wherein the ester diluents comprises a C₁-C₄ alkyl ester of an unsaturated fatty acid.

### Summary of the invention

The present invention relates to a bituminous binder composition comprising a bituminous binder, an elastomer, and a cross-linkable vegetable oil having an iodine value of at least 50, wherein the bituminous binder composition has a dynamic viscosity at 80°C of about 0.5 Pa.s to about 12 Pa.s according to test method NEN-EN 13302-2010. The present invention further relates to the use of the bituminous binder composition in surface dressing operations. The present invention further relates to a process for repairing the surface of an asphalt road construction.

### Detailed description of the invention

The verb "to comprise" as is used in this description and in the claims and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

The term "emulsion" is to be understood as a system in which liquid droplets and/or liquid crystals are dispersed in a liquid. In emulsions the droplets often exceed the usual limits for colloids in size. An emulsion is denoted by the symbol O/W if the continuous phase is an aqueous solution and by W/O if the continuous phase is an organic liquid (an "oil"). More complicated emulsions such as O/W/O (i.e. oil droplets contained within aqueous droplets dispersed in a continuous oil phase or three-phase emulsions) are also included by the term "emulsion". Photographic emulsions, although colloidal systems, are not emulsions in the sense of the term "emulsions" as used in this document (cf. International Union of Pure and Applied Chemistry, Manual of Symbols and Terminology for Physiochemical Quantities and Units, Appendix II, Definitions, Terminology, and Symbols in Colloid and Surface Chemistry, Part 1, web version 2001). The type of emulsion (O/W or W/O) is determined by the volume ratio of the two liquids. For example, with 5% water and 95% oil (an O/W phase ratio of 19), the emulsion is usually W/O.

The term "cross-linkable vegetable oil" is to be understood as a vegetable oil have a iodine value of at least 50, preferably at least 75, and more preferably at least 90. The term "non-crosslinkable vegetable oil". is to be understood as a vegetable oil have a iodine value of less than 50, preferably less than 40, more preferably less than 30.

Coconut oil, commonly known as a saturated oil, i.e. a non-crosslinkable oil, has an iodine value of 10. Iodine values can for example be found in Handbook of Chemistry & Physics, 59th Ed., CRC Press, 1978 - 1979**,** and in The Lipid Handbook, 3rd Ed. , Eds. F.D. Gunstone, J.L. Harwood, A.J. Dijkstra, CRC Press, 2007**.**

### The bituminous bitumen

According to the present invention, the bituminous binder may be a bitumen, a clear synthetic binder, a synthetic resin, a natural resin, and mixtures thereof. Accordingly, the bituminous binder is selected from the group consisting of a bitumen, a blend of a bitumen and an elastomer, a clear synthetic binder, a synthetic resin, a natural resin, and mixtures thereof. The bituminous binder may also be a blend of a bitumen, a clear synthetic binder, a synthetic resin, a natural resin, and mixtures thereof, and an elastomer. However, it is preferred that the bituminous binder is either a bitumen or a blend of a bitumen and an elastomer.

Petroleum hydrocarbon resins are preferably selected from the group of resins consisting of resins manufactured by polymerisation of unsaturated hydrocarbons present in unsaturated petroleum fractions, coumarone-indene resins, hydrogenated petroleum resins, modified petroleum resins, cyclopentadiene-based resins, thermoplastics, or a mixture thereof. Most preferably, the petroleum resin is a C5 - C9 petroleum resin, a C9 - petroleum resin, a C5 - petroleum resin or a mixture thereof.

According to the present invention, the bitumen may be a naphthenic bitumen or a paraffinic bitumen. The bitumen has preferably a penetration of about 6 to about 350 10⁻¹ mm according to ASTM D5, more preferably of about 10 to about 220 10⁻¹ mm, even more preferably about 10 to about 100 10⁻¹ mm.

The bitumen has preferably a softening point according to NEN-EN 1427 of 35° to about 110°C, more preferably about 40° to about 90°C, even more preferably about 45° to about 70°C, and in particular of about 50° to about 65 °C.

Clear synthetic binders are well known in the art and may for example be a petroleum hydrocarbon resin, a natural resin or a synthetic hydrocarbon resin. The clear binder may comprise one or more waxes. A commercially available product is Shell Mexphalte C.

Natural resins and synthetic resins are also well known in the art. These resins include petroleum hydrocarbon resins, wherein the petroleum resin is preferably selected from the group consisting of resins manufactured by polymerisation of unsaturated hydrocarbons present in unsaturated petroleum fractions, coumarone-indene resins, hydrogenated petroleum resins, modified petroleum resins, cyclopentadiene-based resins, thermoplastics and terpene-based resins. Petroleum resins are generally manufactured by polymerisation of unsaturated hydrocarbons that are present in fractions produced in thermal cracking processes and pyrolysis reactions of hydrocarbon fractions. Optionally, such resins may be post-reacted with hydrogen. Coumaron-indene resins are already known for a considerable period of time and are manufactured by polymerisation of unsaturated hydrocarbons that are present in coal tar distillates. Modified petroleum resins are also well known in the art and are for example manufactured by polymerisation of unsaturated hydrocarbons and unsaturated carboxylic acids or unsaturated carboxylic acid anhydrides such as maleic acid anhydride. Another well known process for manufacturing modified petroleum resins involves grafting techniques. Cyclopentadiene-based resins are generally manufactured by polymerising cyclopentadiene-dimer. Terpene resins are manufactured by polymerisation terpenes, usually monoterpenes that are naturally occurring hydrocarbons and which are usually obtained as byproducts of the paper and citrus industries.

Synthetic hydrocarbon resins referred to above are different from elastomers discussed below. Suitable synthetic hydrocarbon resins include polyethylenes and polypropylenes.

### The elastomer

The bituminous binder composition according to the present invention preferably comprises an elastomer. Elastomers are usually added to the bituminous binder composition to improve properties, e.g. the high-temperature rutting resistance and temperature susceptibility and low-temperature flexibility, of the bituminous binder. Consequently, elastomers addition prevents ravelling. In the same time, elastomers they can be detrimental to processability, e.g. spraying, due to their high viscosity. In some cases this requires the addition of solvents and/or fluxing oils to lower the viscosity and to improve solubility of the elastomers in the bituminous binder and the processing and application of the bituminous binder composition.

Preferably, the elastomer is selected from the group consisting of ethylene-vinyl acetate copolymers, polybutadienes, ethylene-propylene copolymers, ethylene-propylene-diene copolymers, butadiene-styrene diblock copolymers, butadiene-styrene-butadiene triblock copolymers, isoprene-styrene diblock copolymers, isoprene-styrene-isoprene triblock copolymers, wherein the diblock or triblock copolymers may occur in morphological shapes as star-shaped polymers wherein a cross-linking agent such as divinyl benzene is employed in the manufacturing process. However, according to the present invention, it is preferred that the elastomer is a polymer or a resin comprising two adjacent, optionally substituted butadiene units such as isoprene, most preferably a polybutadiene, a butadiene-styrene diblock copolymer, a styrene-butadiene-styrene triblock terpolymer, a isoprene-styrene diblock copolymer or a styrene-isoprene-styrene triblock terpolymer. More preferably, the elastomer is a polybutadiene or a styrene-butadiene-styrene triblock terpolymer, in particular because of their good compatibility with bitumen and their excellent visco-elastic properties. In the bituminous binder composition according to the present invention, the elastomer content is preferably about 0.1 to about 7.0 wt. %, more preferably about 0.5 to about 5.0 wt. %, of the elastomer, based on the total weight of the bituminous binder composition.

### The cross-linkable vegetable oil

The cross-linkable vegetable oil is obtainable from glycerol tri-esters comprising one, two or three (multi)unsaturated C₁₀ - C₃₀ fatty acid chains. The glycerol tri-esters may be or may be obtained from oils of natural or synthetic origin. The oils of natural origin are those extracted from seeds or trees and are, for example, linseed oil, linola oil, soybean oil, tall oil, tung oil, oitica oil, corn oil, safflower oil, sunflower oil, sesame oil, rapeseed oil, hemp oil, perilla oil, poppyseed oil, rubberseed oil and walnut oil. The oils of synthetic origin include modified (e.g. transesterified) natural oils which can comprise components and/or fatty acids from natural oils (e.g. fatty acids like oleic, linoleic and linolenic acids).

It is known that tung oil (which comprises about 80 % of the conjugated (9*Z*, 11*E*, 13*E*)-octadeca-9,11,13-trienoic acid) "dries" (i.e. cross-links) more readily than linseed oil (which comprises about 50 % of the non-conjugated (9Z,12Z,15Z)-octadeca-9,12,15-trienoic acid). Linseed oil cross-links more readily than soybean oil (which comprises about 10 % of non-conjugated the non-conjugated (9Z,12Z,15Z)-octadeca-9,12,15-trienoic acid). However, tung oil is produced in only minor quantities whereas linseed oil and soybean oil are commodities. According to the present invention, the oils of natural origin are preferably selected from the group consisting of rapeseed oil (iodine value about 99), linseed oil (iodine value about 179), soybean oil (iodine value about 130), sunflower oil (iodine value about 126) and safflower oil (iodine value about 145). The most preferred oil of natural origin is linseed oil. Cross-linked linseed oil which has a iodine value of about 170 (also known as boiled linseed oil; cf. for example T. Gallagher, D.E. Kline and P.R. Blankenhorn, J. Am. Oil Chem. Soc. 54, 68 - 70, 1977) has a flashpoint of about 296°C (as determined by the Cleveland open cup method; NEN-ISO 2592 which is equivalent with ASTM D92). The amount of the cross-linkable vegetable oil in the bituminous binder composition is preferably about 0.1 wt.% to about 15.0 wt.%, preferably about 2.0 to about 12 wt.%, based on the total weight of the bituminous binder composition. The cross-linkable oil may be in a partially cross-linked state, e.g. boiled linseed oil.

### Further additives

The bituminous binder composition may further comprise a curing agent (also known as siccatives). The curing agent may comprise a sulfur-donor compound. It can further comprise vulcanisation accelerators, either with or without sulfur-donating features. For further details on these types of vulcanisation accelerators and which can be employed in the curing agent, reference is made to US 5.605.946, incorporated by reference herein. Also other curing packages commonly used in the rubber industry can be applied. Other examples of suitable curing agents are metal salts of organic acids, e.g. 2-ethyl hexanoic acid, wherein the metal is Co, Mn or V.

However, it is preferred that the curing agent comprises sulfur, an organic C₆-C₂₄ carboxylic acid or a salt thereof (preferred is the Mn salt), zinc oxide and/or tetramethyl thiuram disulfide.

The bituminous binder composition according to the present invention preferably comprises about 0.01 to about 4.0 wt.% of the curing agent, based on the total weight of the bituminous binder composition, and more preferably about 0.02 to about 3.0 wt.%, and in particular about 0.05 to about 2.0 wt.%.

The bituminous binder composition may further comprise an amide additive, which is preferably represented by the following formula: 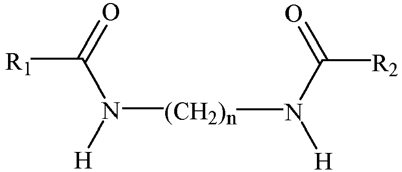 wherein R₁ and R₂ are independently selected from the group consisting of C₁₀ - C₃₀ alkyl groups and wherein n is an integer from 1 to 4. More preferably, R₁ and R₂ are selected from the group consisting of C₁₄ - C₂₀ alkyl groups and is n an integer from 2 to 4. Most preferably, n is 2 so that -(CH₂)ₙ- represents an ethylene group. According to the invention, it is most preferred that the amide additive consists essentially of ethylene bis-stearamide, i.e. a commercially available amide additive that is derived from stearic acid. Suitable, commercially available products are for example Kemamide® W-39 of Crompton Corporation, Loxamid® EBS of Henkel KGaA and Crodamid® EBS of Croda. Preferably, the amide derivative is present in an amount of 0.2 to 4.5 wt.%, based on the total weight of the bituminous binder composition.

The bituminous binder composition may further contain a non-crosslinkable vegetable oil or an animal oil or an derivative of these oils, preferably an ester derivative thereof. Preferred amounts are about 0.1 wt.% to about 20 wt.%, preferably about 0.5 wt.% to about 15 wt.%, based on the total weight of the bituminous binder composition. Suitable vegetable oils are sunflower oil, linseed oil and rapeseed oil. The ester derivatives are preferably mono-alkyl esters, preferably C₁-C₄ alkyl esters, of C₁₂ - C₂₄ fatty acids or mono-alkyl esters, preferably C₁-C₄ alkyl esters, of triglycerides comprising C₈ - C₂₄ fatty acids

### The bituminous binder composition

The bituminous binder composition according to the present invention has a dynamic viscosity at 80°C of about 0.5 Pa.s to about 12 Pa.s according to test method NEN-EN 13302-2010, preferably a dynamic viscosity at 80°C of about 1 Pa.s to about 11 Pa.s, more preferably about 2 Pa.s to about 11 Pa.s, and in particular about 4 Pa.s to about 10 Pa.s.

NEN-EN 13302-2010 is a European standard method which specifies for the determination of the dynamic viscosity of bituminous emulsions (NEN-EN 14896-2010 is for the determination of the dynamic viscosity of cutback and fluxed bituminous binders) by means of a rotating spindle viscometer. Standard application temperatures are quoted, although the dynamic viscosity can be measured at other temperatures if required. Similarly, standard rates of shear are quoted for viscosity measurements, although additional measurements can be taken at varying shear rates if required. NEN-EN 13302-2010 is similar to ASTM D 4402.

The bituminous binder composition preferably comprises about 60.0 - 99.8 wt.% of the bituminous binder, about 0.1 - 20 wt.% elastomer and about 0.1 - 20 wt. cross-linkable vegetable oil, based on the total weight of the bituminous binder composition. Preferably, the bituminous binder composition comprises about 70.0 - 99.0 wt.% of the bituminous binder, about 0.5 - 15 wt.% elastomer and about 0.5 - 15 wt. cross-linkable vegetable oil, based on the total weight of the bituminous binder composition.

The bituminous binder composition according to the present invention may be in the form of an emulsion.

### Applications

The bituminous binder composition according to the present invention can be suitably used in surface dressing operations, wherein the surface dressing operation is preferably selected from the group consisting of road construction, road renovation, joint filling and sealing operations. More preferably, the road renovation is renovation of a layer of very open asphalt.

The bituminous binder composition is in particular suitable for repairing the surface of an asphalt road construction, in particular of a very open asphalt road construction. The bituminous binder composition may be used in the form of an emulsion.

Accordingly, the present invention also relates to a process for repairing the surface of an asphalt road construction, wherein a bituminous binder composition comprising a bituminous binder, an elastomer, and a cross-linkable vegetable oil having an iodine value of at least 50, wherein the bituminous binder composition has a dynamic viscosity at 80°C of about 0.5 Pa.s to about 12 Pa.s according to test method NEN-EN 13302-2010 is applied to the surface of the asphalt road construction.

According to an embodiment of this process, the bituminous binder composition is applied, preferably by spraying, at a temperature of about 170° to about 200°C onto the surface of an asphalt road construction, preferably the surface of a very open asphalt road construction. The amount of the bituminous binder composition that is used is about 0.2 to about 0.8 kg/m², preferably about 0.3 to about 0.6 kg/m². The very open asphalt road construction is about three to about twenty years old. Subsequently, the bituminous binder composition is forced to penetrate the surface of the asphalt road construction so as to wet the aggregate by means of a suitable device, e.g. a wet rubber tired roller, a compactor equipped with rubber tires on which water is applied so the rubber tires are pushing the binder further into the open graded asphalt and the water film prevents significant uptake of the binder from the road surface, a truck equipped with a rubber flap, or by means of a sweeping or brushing device provided with steel or polymer brushes are employed which can for example be towed by a truck, wherein the bituminous binder composition penetrates the surface for about 0.5 - 2 aggregate size. This is preferably done within a period of 0.5 s to 1 minute after that the bituminous emulsion is applied.

If the bituminous binder composition does not contain curing agent, the curing agent can be applied prior, during or after to spraying of the bituminous binder composition, wherein the curing agent is preferably applied by spraying.

In a next step, sand can be added to improve the roughness of the surface and to obtain the required anti-skid performance.

Accordingly, the present invention also relates to a process for a process for repairing the surface of an asphalt road construction, in particular the surface of a very open asphalt road construction, the process comprising the steps of: (1) applying a bituminous binder composition comprising a bituminous binder, an elastomer, and a cross-linkable vegetable oil, wherein the bituminous binder composition has a dynamic viscosity at 80°C of about 0.5 Pa.s to about 12 Pa.s according to test method NEN-EN 13302-2010, to said surface, and (2) forcing the applied bituminous binder to penetrate the surface of the asphalt road construction.

In this process, it is preferred that the bituminous binder composition is applied at a temperature of about 170° to about 200°C. The bituminous binder composition is preferably applied in an amount of about 0.2 to about 0.8 kg/m², preferably about 0.3 to about 0.5 kg/m².

It is also preferred that when the bituminous binder composition does not comprise a curing agent, that the curing agent is applied prior, during or after to spraying of the bituminous binder composition. The curing agent is preferably applied applied by spraying.

### Examples

### Example 1

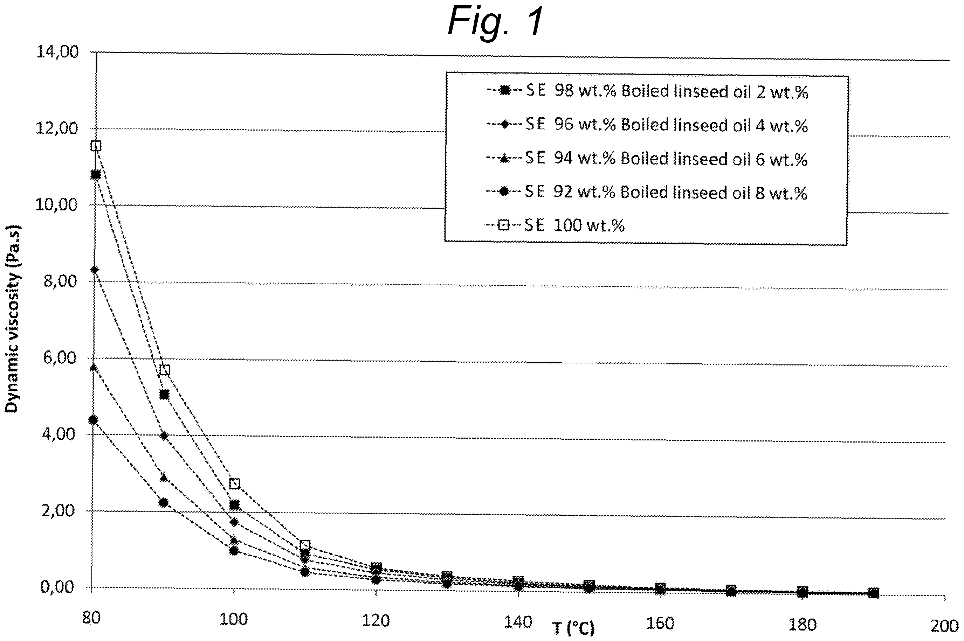

Figure 1 shows the relationship between viscosity and temperature of various bituminous binder compositions. Table 1 gives suitable aggregates size (gradation of very open asphalt) and selected viscosities of the bituminous binder compositions to be sprayed onto the surface of the very open asphalt layer.

**Table 1**

| Aggregate size (mm) | Viscosity (Pa.s; 80°C) |
|---|---|
| 0/16 | 2 - 10 |
| 0/11 | 1.5 - 8 |
| 4/8 | 1 - 6 |
| 2/4 | 0.5 - 4 |

The bituminous binder compositions were prepared from a composition according to WO 2005/087869 (cf. Table 2 for properties) and different amounts of boiled linseed oil (obtained from Mosselman Oleochemicals, Ghlin, Belgium) and curing agent (Durham®/Nuodex® Manganese obtained from Rockwood Pigments, United Kingdom). The amount of curing agent was always 1 wt.% (amount based on the total weight of the bituminous binder composition). The amounts of the composition according to WO 2005/087869 and boiled linseed oil were varied. For very open asphalt comprising 1/16 mm aggregate, 4 wt.% boiled linseed oil was mixed with the composition according to WO 2005/087869 at 180°C in a spraying tank wherein mixing was performed by pumping around. The curing agent (1 wt. %) was added 30 minutes before application of the bituminous binder composition. The amounts are based on the total weight of the bituminous binder composition.

The composition according to WO 2005/087869 is a polymer modified bituminous binder for high quality surface dressing free of volatile solvents. It has the following physical properties (Table 2).

**Table 2**

| Product properties | Standard | Test result | Specification | Class |
|---|---|---|---|---|
| Polymer modified bitumen | | | | |
| Dynamic viscosity @ 60°C (Pa.s) | NEN-EN 13302 | | 30 - 100 | 6 |
| Adhesivity (% coating) | NEN-EN 15626 | | ≥ 90 | 3 |
| After recovery | prEN 13074-1 | | | |
| Softening Point (Ring & Ball) (°C) | NEN-EN 1427 | | >50 | 6 |
| After stabilisation | prEN 13074-1 followed by prEN 13074-2 | | | |
| Penetration @ 25°C (10⁻¹ mm) | NEN-EN 1426 | | < 220 | 5 |
| Softening Point [Ring & Ball] (°C) | NEN-EN 1427 | | >50 | 3 |
| Cohesion [Pendulum] (J/cm²) | NEN-EN 13588 | | > 1,2 | 5 |

The boiled linseed oil had the following properties:
- Yellow liquid;
- Boiling point > 315.6°C;
- Flash point: 296°C;
- Melting point: -23.9 °C;
- Density 0.93 g/cm³.

### Example 2

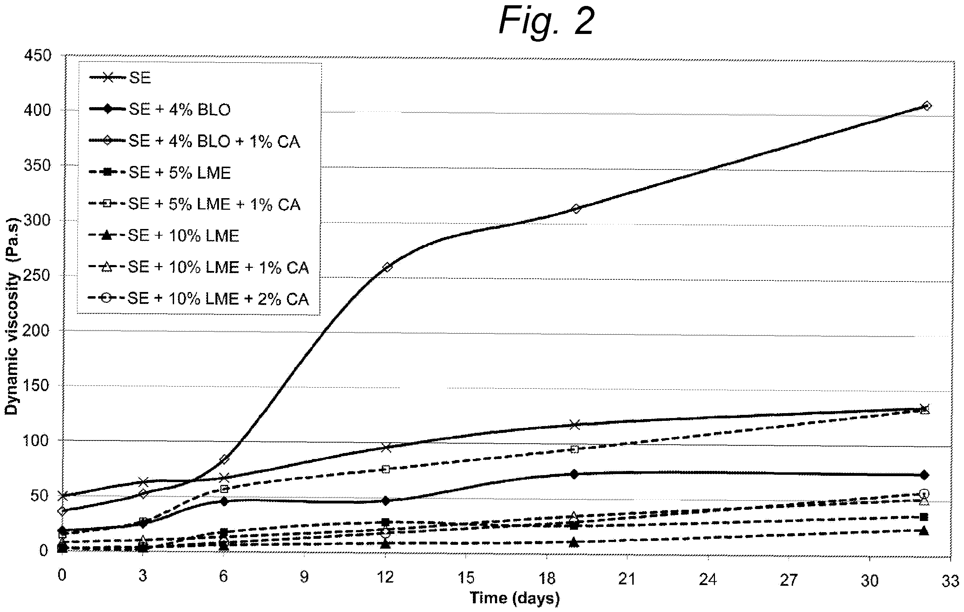

Figure 2 shows the influence of the amount of the curing agent (Durham®/Nuodex® Manganese obtained from Rockwood) on the dynamic viscosity (80 °C) development after application of the bituminous binder composition. The abbreviations SE, BLO, LME and CA refer to the bituminous binder composition, the boiled or blown linseed oil (in presence of oxygen), linseed oil methyl ester and the curing agent, respectively. The results show that with a cross-linkable oil (here boiled linseed oil) a stronger increase of the dynamic viscosity is obtained than with LME when no CA is added. However, the effect of the CA on the increase of the dynamic viscosity of a when a boiled oil (here boiled linseed oil) is used is much more pronounced.

### Example 3

A bituminous binder composition as described in Example 1, modified with 4 wt% of boiled linseed oil, to which 1 wt% of curing agent (Durham®/Nuodex® Manganese) was added prior to application, was sprayed onto an approximately five years old very open asphalt. The treatment was performed in collaboration with BAM Wegen, on Highway A6, near the towns of Emmeloord / Bant, the Netherlands, under the following weather conditions: asphalt temperature was about 9°C, air temperature was about 9°C and relative humidity of about 85 to 90%. The rate of application using a spraying unit was about 0.4 kg/m². Shortly after application, a rubber scraper was used to remove the excess binder from the top surface of the very open asphalt, followed by spraying of a low penetration grade bitumen emulsion (spraying rate: 0.4 kg/m²). This emulsion was applied in order to avoid stickiness of the bituminous binder to the car tires. In order to provide sufficient anti-skid performance, the bitumen film was sanded using 0/3 and 0/2 mm sand fractions; the sand was applied before the bitumen was completely precipitated from the emulsion phase. The total system was then compacted by a tyre-compactor (including water on tyres to prevent adhesion of binder to tyres) in order to press the binder from top of stones/surface to open areas in the asphalt surface.

### Example 4

A bituminous binder composition as described in Example 1, modified with 4 wt% of boiled linseed oil, to which 1 wt% of curing agent (Durham®/Nuodex® Manganese) was added prior to application was sprayed onto an approximately five years old very open and non-modified asphalt (6/16). The treatment was performed in collaboration with BAM Wegen, on Highway A50, near the town of Hoenderloo, the Netherlands, under the following weather conditions: asphalt temperature was about 5.5° to about 7°C, air temperature was about 5.5° to about 7°C and relative humidity of about 70 to 80%. The rate of application using a spraying unit was about 0.4 kg/m². Shortly after application, excess binder was removed from the top layer of the very open asphalt by means of a brushing device provided with steel brushes. In order to provide sufficient anti-skid performance, the bitumen film was sanded using 0/3 and 0/2 mm sand fractions; the sand was applied before the bitumen was completely precipitated from the emulsion phase. The total system was then compacted by a tyre-compactor (including water on tyres to prevent adhesion of binder to tyres) in order to press binders from top of stones/surface to open areas in the asphalt surface.

### Example 5

A bituminous binder as described in Example 1, modified with 7 wt% of linseed methyl ester oil was sprayed onto an approximately six years old porous asphalt (4/8). The treatment was performed in collaboration with BAM Wegen, on highway A73, near the town of Nijmegen, the Netherlands. The rate of application using a spraying unit was about 0.4 kg/m². Shortly after application, a rubber scraper is used to remove the excess binder from the top layer of the very open asphalt. In order to provide sufficient anti-skid performance, the bitumen film is sanded using 0/3 and 0/2 mm sand fractions; the sand is applied before the bitumen is completely precipitated from the emulsion phase. The total system is compacted using a tyre-compactor (including water on tyres to prevent adhesion of binder to tyres) in order to press binders from top of stones/surface to open areas in the asphalt surface.

## Claims

1. A bituminous binder composition comprising a bituminous binder, an elastomer, and a cross-linkable vegetable oil having an iodine value of at least 50, wherein the bituminous binder composition has a dynamic viscosity at 80°C of about 0.5 Pa.s to about 12 Pa.s according to test method NEN-EN 13302-2010.

2. The bituminous binder composition according to Claim 1, wherein the bituminous binder is selected from the group consisting of a bitumen, a blend of a bitumen and an elastomer, a clear synthetic binder, a synthetic resin, a natural resin, and mixtures thereof.

3. The bituminous binder composition according to Claim 2, wherein the bituminous binder is a bitumen or a blend of a bitumen and an elastomer.

4. The bituminous binder composition according to any one of Claim1 - 3, wherein the elastomer is a polymer or a resin comprising two adjacent, optionally substituted butadiene units.

5. The bituminous binder composition according to any one of Claims 1 - 4, wherein the elastomer is selected from the group consisting of ethylene-vinyl acetate copolymers, polybutadienes, ethylene-propylene copolymers, ethylene-propylene-diene copolymers, butadiene-styrene diblock copolymers, butadiene-styrene-butadiene triblock copolymers, isoprene-styrene diblock copolymers, and isoprene-styrene-isoprene triblock copolymers.

6. The bituminous binder composition according to any one of Claims 1 - 5, wherein the bituminous binder composition comprises about 60.0 - 99.8 wt.% bitumen, about 0.1 - 20 wt.% elastomer and about 0.1 - 20 wt. cross-linkable vegetable oil, based on the total weight of the bituminous binder composition.

7. The bituminous binder composition according to any one of Claims 1 - 6, wherein the bituminous binder composition comprises a curing agent.

8. The bituminous binder composition according to any one of Claims 1 - 7, wherein the bituminous binder composition further comprises a non-crosslinkable vegetable oil, an animal oil, an ester of a vegetable oil or an ester of an animal oil.

9. The bituminous binder composition according to Claims 8, wherein the ester is a mono-alkyl ester.

10. The bituminous binder composition according to any one of Claims 1 - 9, wherein the bituminous binder composition comprises an amide additive.

11. Use of the bituminous binder composition according to any one of Claims 1 - 10 in surface dressing operations.

12. Use according to Claim 11, wherein the surface dressing operation is selected from the group consisting of road construction, road renovation, joint filling and sealing operations.

13. Use according to Claim 12, wherein the road renovation is renovation of a layer of very open asphalt.

14. Emulsion comprising the bitumen binder composition according to any one of Claims 1 - 10.

15. Process for repairing the surface of an asphalt road construction, wherein a bituminous binder composition comprising bitumen, an elastomer, and a cross-linkable vegetable oil having an iodine value of at least 50, wherein the bituminous binder composition has a dynamic viscosity at 80°C of about 0.5 Pa.s to about 12 Pa.s according to test method NEN-EN 13302-2010, is applied to the surface of the asphalt road construction.

16. Process according to Claim 15, wherein the bituminous binder composition is applied in the form of an emulsion.

17. Process according to Claim 15 or Claim 16, said process comprising the steps of: (1) applying a bituminous binder composition comprising a bituminous binder, an elastomer, and a cross-linkable vegetable oil, wherein the bituminous binder composition has a dynamic viscosity at 80°C of about 0.5 Pa.s to about 12 Pa.s according to test method NEN-EN 13302-2010, to said surface, and (2) forcing the applied bituminous binder to penetrate the surface of the asphalt road construction.

18. Process according to Claim 17, wherein forcing the applied bituminous binder to penetrate the surface of the asphalt road construction is conducted by using a wet rubber tired roller, a compactor equipped with rubber tires on which water is applied, a truck equipped with a rubber flap, or a weeping or brushing device provided with steel or polymer brushes.

## Patentansprüche

1. Bitumenbinderzusammensetzung, welche einen Bitumenbinder, ein Elastomer und ein quervernetzbares Pflanzenöl mit einer Jodzahl von mindestens 50 aufweist, wobei die Bitumenbinderzusammensetzung eine dynamische Viskosität bei 80°C von ungefähr 0,5 Pa.s bis ungefähr 12 Pa.s gemäß dem Testverfahren NEN-EN 13302-2010 hat.

2. Bitumenbinderzusammensetzung nach Anspruch 1, wobei der Bitumenbinder aus der Gruppe ausgewählt ist, die aus Bitumen, einer Mischung aus Bitumen und einem Elastomer, einem durchsichtigen synthetischen Binder, einem synthetischen Harz, einem natürlichen Harz und Mischungen davon besteht.

3. Bitumenbinderzusammensetzung nach Anspruch 2, wobei der Bitumenbinder ein Bitumen oder eine Mischung aus einem Bitumen und einem Elastomer ist.

4. Bitumenbinderzusammensetzung nach einem der Ansprüche 1 - 3, wobei das Elastomer ein Polymer oder ein Harz ist, welches zwei benachbarte optional substituierte Butadieneinheiten aufweist.

5. Bitumenbinderzusammensetzung nach einem der Ansprüche 1 - 4, wobei das Elastomer aus der Gruppe ausgewählt ist, die aus Äthylen-Vinylazetat-Copolymeren, Polybutadienen, Äthylen-Propolylen-Copolymeren, Äthylen-Propylen-Dien-Copolymeren, Butadien-Styrol-Diblock-Copolymeren, Butadien-Styrol-Butadien-Triblock-Copolymeren, Isopren-Styrol-Diblock-Copolymeren und Isopren-Styrol-Isopren-Triblock-Copolymeren besteht.

6. Bitumenbinderzusammensetzung nach einem der Ansprüche 1 - 5, wobei die Bitumenbinderzusammensetzung ungefähr 60,0 - 99,8 Gewichtsprozent Bitumen, ungefähr 0,1 - 20 Gewichtsprozent Elastomer und ungefähr 0,1 - 20 Gewichtsprozent quervernetzbares Pflanzenöl aufweist, und zwar basierend auf dem Gesamtgewicht der Bitumenbinderzusammensetzung .

7. Bitumenbinderzusammensetzung nach einem der Ansprüche 1 - 6, wobei die Bitumenbinderzusammensetzung ein Aushärtungsmittel aufweist.

8. Bitumenbinderzusammensetzung nach einem der Ansprüche 1 - 7, wobei die Bitumenbinderzusammensetzung weiter ein nicht quervernetzbares Pflanzenöl, ein tierisches Öl, einen Ester eines Pflanzenöls oder einen Ester eines tierischen Öls aufweist.

9. Bitumenbinderzusammensetzung nach Anspruch 8, wobei der Ester ein Monoalkylester ist.

10. Bitumenbinderzusammensetzung nach einem der Ansprüche 1 - 9, wobei die Bitumenbinderzusammensetzung einen Amidzusatzstoff aufweist.

11. Verwendung der Bitumenbinderzusammensetzung nach einem der Ansprüche 1 - 10 bei Oberflächenabrichtungsvorgängen.

12. Verwendung nach Anspruch 11, wobei der Oberflächenabrichtungsvorgang aus der Gruppe ausgewählt ist, die aus Straßenbau-, Straßenrenovierungs-, Verbindungsfüll- und Abdichtungsvorgängen besteht.

13. Verwendung nach Anspruch 12, wobei die Straßenrenovierung eine Renovierung einer Schicht von sehr offenem Asphalt ist.

14. Emulsion, welche die Bitumenbinderzusammensetzung nach einem der Ansprüche 1 - 10 aufweist.

15. Verfahren zum Reparieren der Oberfläche einer Asphaltstraßenkonstruktion, wobei eine Bitumenbinderzusammensetzung, welche Bitumen, ein Elastomer und ein quervernetzbares Pflanzenöl mit einer Jodzahl von mindestens 50 aufweist, wobei die Bitumenbinderzusammensetzung eine dynamische Viskosität bei 80°C von ungefähr 0,5 Pa.s bis ungefähr 12 Pa.s gemäß dem Testverfahren NEN-EN 13302-2010 hat, auf die Oberfläche der Asphaltstraßenkonstruktion aufgebracht wird.

16. Verfahren nach Anspruch 15, wobei die Bitumenbinderzusammensetzung in Form einer Emulsion aufgebracht wird.

17. Verfahren nach Anspruch 15 oder Anspruch 16, wobei das Verfahren folgende Schritte aufweist: (1) Aufbringen einer Bitumenbinderzusammensetzung, welche einen Bitumenbinder, ein Elastomer und ein quervernetzbares Pflanzenöl aufweist, wobei die Bitumenbinderzusammensetzung eine dynamische Viskosität bei 80°C von ungefähr 0,5 Pa.s bis ungefähr 12 Pa.s gemäß dem Testverfahren NEN-EN 13302-2010 hat, auf die Oberfläche und (2) Zwingen des aufgebrachten Bitumenbinders, zum Eindringen in die Oberfläche der Asphaltstraßenkonstruktion.

18. Verfahren nach Anspruch 17, wobei das Zwingen des aufgebrachten Bitumenbinders zum Eindringen in die Oberfläche der Asphaltstraßenkonstruktion, ausgeführt wird durch Verwendung einer befeuchteten Gummiradwalze, eines Verdichtungsgerätes, welches mit Gummirädern ausgerüstet ist, auf welche Wasser aufgebracht wird, eines Lastwagens, der mit einem Gummiwischer ausgerüstet ist, oder einer Fege- oder Bürstvorrichtung, die mit Stahl- oder Kunststoffbürsten versehen ist.

## Revendications

1. Composition de liant bitumineux comprenant un liant bitumineux, un élastomère et une huile végétale réticulable ayant un indice d'iode d'au moins 50, dans laquelle la composition de liant bitumineux a une viscosité dynamique à 80°C d'environ 0,5 Pa.s à environ 12 Pa.s selon la méthode de test NEN-EN 13302-2010.

2. Composition de liant bitumineux selon la revendication 1, dans laquelle le liant bitumineux est choisi dans le groupe constitué d'un bitume, d'un mélange d'un bitume et d'un élastomère, d'un liant synthétique clair, d'une résine synthétique, d'une résine naturelle, et de mélanges de ceux-ci.

3. Composition de liant bitumineux selon la revendication 2, dans laquelle le liant bitumineux est un bitume ou un mélange d'un bitume et d'un élastomère.

4. Composition de liant bitumineux selon l'une quelconque des revendications 1 à 3, dans laquelle l'élastomère est un polymère ou une résine comprenant deux unités de butadiène adjacentes éventuellement substituées.

5. Composition de liant bitumineux selon l'une quelconque des revendications 1 à 4, dans laquelle l'élastomère est choisi dans le groupe constitué de copolymères d'éthylène-acétate de vinyle, de polybutadiènes, de copolymères d'éthylène-propylène, de copolymères d'éthylène-propylènediène, de copolymères de butadiène-styrène dibloc, de copolymères de butadiène-styrène-butadiène triblocs, de copolymères d'isoprène-styrène diblocs et de copolymères d'isoprène-styrène-isoprène triblocs.

6. Composition de liant bitumineux selon l'une quelconque des revendications 1 à 5, dans laquelle la composition de liant bitumineux comprend environ 60,0 à 99,8 % en poids de bitume, environ 0,1 à 20 % en poids d'élastomère et environ 0,1 à 20 % en poids huile végétale réticulable, par rapport au poids total de la composition de liant bitumineux.

7. Composition de liant bitumineux selon l'une quelconque des revendications 1 à 6, dans laquelle la composition de liant bitumineux comprend un agent de durcissement.

8. Composition de liant bitumineux selon l'une quelconque des revendications 1 à 7, dans laquelle la composition de liant bitumineux comprend en outre une huile végétale non réticulable, une huile animale, un ester d'une huile végétale ou un ester d'une huile animale.

9. Composition de liant bitumineux selon la revendication 8, dans laquelle l'ester est un ester monoalkylique.

10. Composition de liant bitumineux selon l'une quelconque des revendications 1 à 9, dans laquelle la composition de liant bitumineux comprend un additif amide.

11. Utilisation de la composition de liant bitumineux selon l'une quelconque des revendications 1 à 10 dans des opérations de traitement de surface.

12. Utilisation selon la revendication 11, dans laquelle l'opération de traitement de surface est choisie dans le groupe comprenant les opérations de construction, de rénovation de routes, de remplissage de joints et d'étanchéification.

13. Utilisation selon la revendication 12, dans laquelle la rénovation routière est la rénovation d'une couche d'asphalte très ouvert.

14. Emulsion comprenant la composition de liant bitumeux selon l'une quelconque des revendications 1 à 10.

15. Méthode de réparation de la surface d'une construction de route en asphalte, dans laquelle une composition de liant bitumineux comprenant du bitume, un élastomère et une huile végétale réticulable ayant un indice d'iode d'au moins 50, dans laquelle la composition de liant bitumineux a une viscosité dynamique à 80°C d'environ 0,5 Pa.s à environ 12 Pa.s selon la méthode de test NEN-EN 13302-2010, est appliquée à la surface de la construction de la route en asphalte.

16. Méthode selon la revendication 15, dans laquelle la composition de liant bitumineux est appliquée sous la forme d'une émulsion.

17. Méthode selon la revendication 15 ou 16, ladite méthode comprenant les étapes consistant à : (1) appliquer une composition de liant bitumineux comprenant un liant bitumineux, un élastomère et une huile végétale réticulable, dans laquelle la composition de liant bitumineux a une viscosité dynamique à 80°C d'environ 0,5 Pa.s à environ 12 Pa.s selon la méthode de test NEN-EN 13302-2010, sur ladite surface, et (2) forcer le liant bitumineux appliqué à pénétrer la surface de la construction de la route en asphalte.

18. Méthode selon la revendication 17, dans laquelle l'étape consistant à forcer le liant bitumineux appliqué à pénétrer la surface de la construction de route en asphalte est réalisée en utilisant un rouleau à pneu en caoutchouc humide, un compacteur équipé de pneus en caoutchouc sur lequel de l'eau est appliquée, un camion équipé d'un rabat en caoutchouc ou un dispositif de mouillage ou de brossage muni de brosses en acier ou en polymère.
